**Europäisches Patentamt**

**European Patent Office**

**Office européen des brevets**

(19)

(11) Veröffentlichungsnummer: **0 142 110**
**B1**

(12) **EUROPÄISCHE PATENTSCHRIFT**

(45) Veröffentlichungstag der Patentschrift:
25.01.89

(51) Int. Cl.⁴: **G 01 L 5/12,** G 01 L 1/12

(21) Anmeldenummer: 84113266.5

(22) Anmeldetag: 03.11.84

(54) **Magnetoelastisches Kraftmessgerät.**

(30) Priorität: 09.11.83 SE 8306161

(43) Veröffentlichungstag der Anmeldung:
22.05.85 Patentblatt 85/21

(45) Bekanntmachung des Hinweises auf die Patenterteilung:
25.01.89 Patentblatt 89/4

(84) Benannte Vertragsstaaten:
DE FR GB IT

(56) Entgegenhaltungen:
FR-A-949 633
GB-A-880 889

THE INSTITUTE OF MARINE ENGINEERS
TRANSACTIONS, Band 63, Nr. 7, Juli 1951, Seiten
115-131, London, GB; R. COOK et al.: "Marine
torsionmeters and thrustmeters"

(73) Patentinhaber: ASEA AB, S-721 83 Västeras (SE)

(72) Erfinder: Nordvall, Jan O., Dipl.- Ing.,
Rundhällsvägen 10, S-722 31 Västeras (SE)

(74) Vertreter: Boecker, Joachim, Dr.- Ing.,
Rathenauplatz 2-8, D-6000 Frankfurt a.M. 1 (DE)

EP 0 142 110 B1

## Beschreibung

Die vorliegende Erfindung betrifft ein magnetoelastisches Kraftmeßgerät, das insbesondere zum Messen von Axialkräften an rotierenden Wellen, beispielsweise bei Werkzeugmaschinen, geeignet ist. Die Erfindung kann jedoch auch als Zugmeßgerät, beispielsweise zur Messung einer Seilspannung, oder als Lastzelle zur Messung von Druckkräfte verwendet werden.

Da ein Axialkraftmeßgerät für Werkzeugmaschinen die auf ein Lager, normalerweise ein Kugellager, wirkende Axialkraft messen soll, muß es einen rotationssymmetrischen Aufbau haben, damit für das Lager eine gleichmäßige Anlagefläche vorhanden ist und das Meßgerät leicht in das Maschinengehäuse eingebaut werden kann. Ferner muß das Meßgerät eine möglichst geringe Länge in Achsrichtung der Welle haben, große Überlasten aufnehmen können und unempfindlich gegen Umweltfaktoren sein, wie beispielsweise Temperaturschwankungen sowie Öl und Schneidflüssigkeiten. Mit Rücksicht auf die letztgenannten Anforderungen sollte das Meßgerät vorzugsweise hermetisch verschlossen sein.

Der Erfindung liegt die Aufgabe zugrunde ein magnetoelastisches Kraftmeßgerät zu entwickeln, welches den vorgenannten Forderungen entspricht.

Zur Lösung dieser Aufgabe wird ein magnetoelastisches Kraftmeßgerät vorgeschlagen, welches die im Patentanspruch genannten Merkmale hat.

Das magnetoelastische Kraftmeßgerät gemäß der Erfindung besteht im wesentlichen aus einem Rotationskörper aus weichmagnetischem Material mit zwei gleichen relativ dünnen, krafterfassenden zylindrischen Teilen, die von in Reihe geschalteten wechselstromgespeisten Magnetisierungswicklungen und gegensinnig in Reihe geschalteten Meßwicklungen umgeben sind, welche bei unbelastetem Meßgerät den Meßspannungswert Null liefern. Zwischen den krafterfassenden Teilen ist ein nach innen gerichteter Flansch vorhanden, der als Anschlag für ein axialkraftaufnehmendes Lager dient. Zwischen den Wicklungen und außerhalb der Wicklungen hat der Rotationskörper nach außen gerichtete Flansche, die etwa den gleichen Außendurchmesser wie die Wicklungen haben. Der Rotationskörper ist von einem aus weichmagnetischem Material bestehenden Rohr umgeben, das an den äußeren Flanschen mittels schubkraftübertragender Fugen befestigt ist und mit dem mittleren Flansch einen kleinen Luftspalt bildet, wodurch eine auf den zentralen Innenflansch wirkende Axialkraft in dem einen krafterfassenden Teil eine den magnetischen Fluß vergrößernden Zugbeanspruchung und in dem anderen krafterfassenden Teil eine den magnetischen Fluß verkleinernde Druckbeanspruchung erzeugt, wenn das Material ein solches mit positiver Magnetostriktion ist. Der Flußunterschied in den beiden krafterfassenden Teilen induziert in den gegeneinander geschalteten Meßwicklungen eine resultierende Meßspannung, die der Axialkraft proportional ist und die eine von der Kraftrichtung bestimmte Phasenlage hat. Durch phasenempfindliche Gleichrichtung erhält man ein Meßsignal, das die zu messende Kraft nach Größe und Richtung beschreibt.

Anhand des in den Figuren gezeigten Ausführungsbeispiels soll die Erfindung näher erläutert werden. Es zeigen

Figur 1A und 1B Schnitte längs der Linie B - B in Figur 1B bzw. A - A in Figur 1A ein Axialkraftmeßgerät gemäß der Erfindung zusammen mit Wellen und Kugellager, eingespannt in einem Gehäuse zum Messem einer Axialkraft, die ihr Vorzeichen wechseln kann,

Figur 2 eine Schaltung zur Speisung der Magnetisierungswicklungen und zur Verarbeitung des von den Messwicklungen gelieferten Signals.

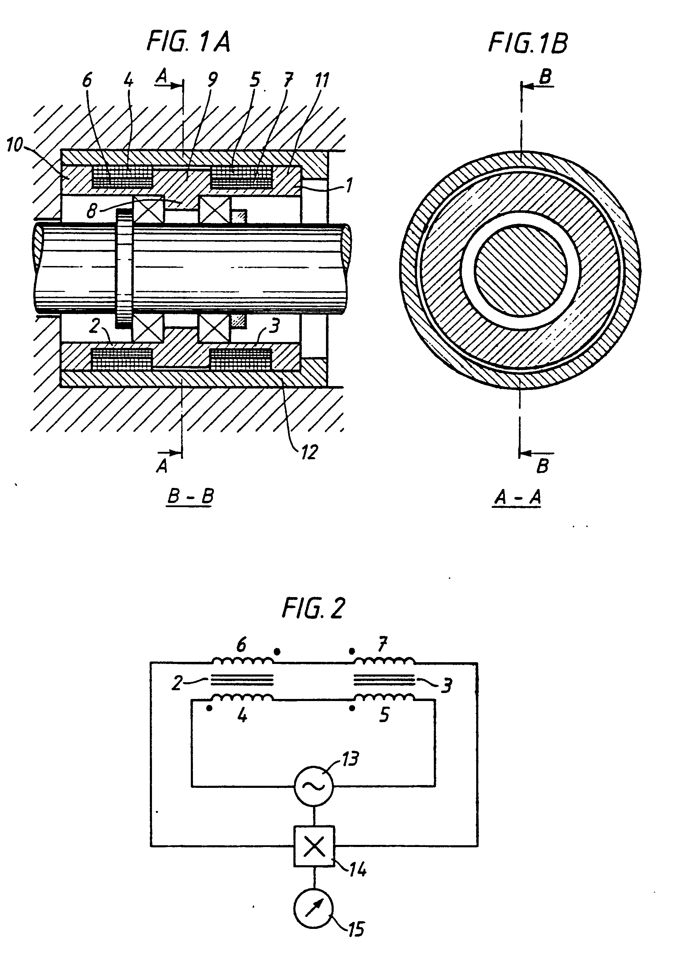

Figur 1 zeigt den Rotationskörper 1 aus weichmagnetischem Material mit den beiden dünnen, krafterfassenden Teilen 2 und 3. Um diese sind einerseits die in Reihe geschalteten, wechselstromgespeisten Magnetisierungswicklungen 4 und 5 und andererseits die gegeneinander geschalteten Meßwicklungen 6 und 7 gewickelt. Der Rotationskörper hat zwischen den krafterfassenden Teilen einen nach innen gerichteten Flansch 8, der als Anschlag für Axialkräfte aufnehmende Lager dient. Im gezeigten Ausführungsbeispiel ist auf jeder Seite des Flansches 8 ein Lager vorhanden, um Axialkraftmessungen in beiden Richtungen vornehmen zu können. Ferner hat der Rotationskörper einen nach außen gerichteten Flansch 9, der im wesentlichen den gleichen Außendurchmesser hat wie die Wicklungen. Außerhalb der kraftmessende Teile hat der Rotationskörper außerdem äußere Flansche 10 und 11, deren Außendurchmesser mindestens genauso groß wie die der Wicklungen sind. Der Rotationskörper ist von einem Rohr 12 aus weichmagnetischem Material umgeben, welches mit dem mittleren Flansch 9 einen Luftspalt bildet und an den äußeren Flanschen 10 und 11 mittels schubkraftübertragender Fugen, zweckmäßigerweise durch Schweißen, befestigt ist. Das Rohr 12 dient einerseits als magnetischer Rückschluß für die magnetischen Flüsse durch die krafterfassenden Teile 2 und 3 und andererseits als ein mechanisch tragendes Element, welches die Kraft desjenigen krafterfassenden Teils aufnimmt, welches in dem jeweiligen Meßvorgang auf Zug beansprucht wird.

Wenn der Rotationskörper aus einem Material mit positiver Magnetostriktion, wie z. B. Eisen bei mäßiger Magnetisierung, besteht, so wird die Permeabilität und damit der magnetische Fluß in dem zugbelasteten Teil größer, während die Permeabilität und damit der Fluß in dem druckbelasteten Teil kleiner wird. Hierdurch wird eine der zu messenden Kraft proportionale Spannung in den gegensinnig in Reihe geschalteten Meßwicklungen induziert.

Figur 2 zeigt, wie die in Reihe geschalteten Magnetisierungswicklungen 4 und 5 von einer Wechselstromquelle 13 gespeist werden, die zugleich den phasenempfindlichen Gleichrichter 14 speist, der das kraftproportionale Signal von den gegensinnig in Reihe geschalteten Meßwicklungen 6 und 7 gleichrichtet. Das gleichgerichtete Meßsignal wird von dem Gerät 15 angezeigt.

Das vorstehend beschriebene Ausführungsbeispiel beschreibt die Erfindung anhand der Anwendung zur Messung des Axialdruckes bei einer rotierenden Welle. Dieselbe Ausführungsform kann auch als Zuglastzelle zum Messen beispielsweise einer Seilspannung verwendet werden. Die gezeigte Ausführungsform kann in unveränderter Ausführung auch zur Druckkraftmessung verwendet werden, wobei die zu messende Kraft auf ein zylindrisches Druckstück zur Einwirkung gebracht wird, welches auf dem kraftaufnehmenden Flansch ruht. Eine andere denkbare Ausführungsform besteht darin, daß man den Flansch durch eine volle Scheibe ersetzt auf welcher die Kraft zur Einwirkung gebracht wird.

**Patentanspruch**

Magnetoelastisches Kraftmeßgerät dadurch gekennzeichnet, daß es einen Rotationskörper (1) aus weichmagnetischem Material enthält, der mit zwei im wesentlichen gleichen, dünnen, krafterfassenden, zylindrischen Teilen (2, 3) versehen ist, die von in Reihe geschalteten, wechselstromgespeisten Magnetisierungswicklungen (4, 5) und gegensinnig in Reihe geschalteten Meßwicklungen (6, 7) umgeben sind, daß zwischen den genannten dünnen Teilen ein nach innen gerichteter, kraftaufnehmender Innenflansch oder eine Scheibe (8) und ein nach außen gerichteter Mittelflansch (9) vorhanden ist, wobei der Mittelflansch (9) im wesentlichen den gleichen Außendurchmesser wie die Gesamtwicklungen auf der Außenseite der genannten dünnen Teile hat, daß an den axial außen gelegenen Seiten nach außen gerichtete Flansche (10, 11) vorhanden sind, deren Außendurchmesser mindestens genauso groß wie der der Gesamtwicklungen auf den dünnen Teilen ist, daß der Rotationskörper von einem aus weichmagnetischem Material bestehenden Rohr (12) umgeben ist, welches an den äußeren nach außen gerichteten Flanschen (10, 11) mittels schubkraftübertragender Fugen befestigt ist und einen kleinen Luftspalt gegenüber dem nach außen gerichteten Mittelflansch begrenzt, und daß die nach außen gerichteten Flansche (10, 11) zugleich als Auflagefläche für die Reaktionskraft dienen.

**Claim**

Magnetoelastic force transducer characterized in that it comprises a solid of revolution (1) of soft-magnetic material provided with two substantially identical thin, force-sensing, cylindrical parts (2, 3) which are surrounded by series-connected, AC-current supplied magnetizing windings (4, 5) and oppositely series-connected measuring windings (6, 7), that between said thin parts there is an inwardly directed, force-absorbing inner flange or a disc (8) and an outwardly directed middle flange (9), the middle flange (9) having substantially the same outer diameter as the entire windings on the outer side of said thin parts, that the axially outer sides are provided with outwardly extending flanges (10, 11), the outer diameter of which is at least as large as that of the entire windings on said thin parts, that the solid of revolution is surrounded by a tube (12) of soft-magnetic material, which tube is fixed to the outer outwardly-extending flanges (10, 11) by means of joints, capable of transmitting shearing forces, and which tube defines a narrow air gap with the outwardly extending middle flange, and that the outwardly extending flanges (10, 11) simultaneously serve as supporting surface for the reactive force.

**Revendication**

Capteur de force à magnétostriction, caractérisé par le fait qu'il comporte un corps de révolution (1) en un matériau magnétique doux, pourvu de deux parties cylindriques (2, 3) et sensiblement identiques, minces et saisissant la force, lesdites parties (2, 3) étant éntourées d'enroulements d'aimantation (4, 5) montés en série et alimentés en courant alternatif et d'enroulements de mesure (6, 7) montés en série mais en sens inverse l'un par rapport à l'autre, qu'entre lesdites parties minces il est prévu un flasque intérieur ou un disque (8) dirigé vers l'intérieur et captant la force, ainsi qu'un flasque médian (9) dirigé vers l'extérieur, ce dernier ayant sensiblement le même diamètre extérieur que l'ensemble des enroulements sur le côté extérieur desdits éléments minces, qu'il est prévu sur les côtés axialement extérieur des flasques (10, 11) dirigés vers l'extérieur, dont les diamètres extérieurs sont pour le moins égaux au diamètre de l'ensemble des enroulements montés sur les parties minces, que le corps de révolution est entouré d'un tube (12) fait avec un matériau magnétique doux, qui est fixé aux flasques extérieurs (10, 11) dirigés vers l'extérieur à l'aide d'emboîtements capables de transmettre des forces de poussée, et délimitant un faible entrefer par rapport au flasque médian dirigé vers l'extérieur, et qui les flasques (10, 11) dirigés vers l'extérieur servent en même temps de surface d'appui pour les forces de réaction.

## FIG. 1A

## FIG.1B

B - B

A - A

## FIG. 2